# FASCICULE DE BREVET EUROPEEN

(11) **EP 3 983 278 B1**
(45) Date de publication et mention de la délivrance du brevet: **14.08.2024**
(21) Numéro de dépôt: 20742326.0
(22) Date de dépôt: 08.06.2020
(51) Int. Cl.: B62D 15/02

(54) **SYSTÈME DE STATIONNEMENT AUTOMATIQUE D'UN VÉHICULE**
AUTOMATISCHES FAHRZEUGPARKSYSTEM
AUTOMATIC VEHICLE PARKING SYSTEM

(30) Priorité: 13.06.2019 FR 1906317
(43) Date de publication de la demande: 20.04.2022
(73) Titulaire: Stellantis Auto SAS, 78300 Poissy (FR)
(72) Inventeur: DI BELLO, Marco, 78990 ELANCOURT (FR)
(86) Numéro de dépôt international: PCT/FR2020/050974
(87) Numéro de publication internationale: WO 2020/249894

(56) Documents cités:
- JP-A- 2010 008 055
- KR-A- 20150 024 541

## Description

### Domaine technique

L'invention se rapporte au domaine technique des systèmes de stationnement automatique de véhicule.

### État de l'art

Un système de stationnement automatique de véhicule connu de l'état de la technique, comporte :
- au moins un capteur à ultrasons, agencé pour détecter un obstacle à l'arrière du véhicule, et configuré pour mesurer une distance parcourue entre le véhicule et une cible fixe ;
- des moyens de calcul, configurés pour calculer une trajectoire de stationnement du véhicule en fonction de la distance mesurée ;
- des moyens de commande, agencés pour commander un groupe motopropulseur du véhicule comprenant les roues motrices ; les moyens de commande étant configurés pour appliquer un couple aux roues motrices selon la trajectoire de stationnement calculé par les moyens de calcul.

Un tel système de l'état de la technique n'est pas entièrement satisfaisant dans la mesure où il peut entraîner un mauvais positionnement du véhicule à la fin de la manoeuvre, comme par exemple des heurts contre un trottoir. En effet, un tel système de l'état de la technique ne prend pas en considération les dimensions des roues qui influencent les manoeuvres de stationnement automatique. Or, les dimensions des roues peuvent varier avec le temps (indépendamment les unes des autres), par exemple en raison de l'usure ou du gonflage des pneumatiques, du poids du véhicule en charge etc.

Par ailleurs, il est connu de l'état de la technique, notamment du document DE 10 2011 118 249, de déterminer la circonférence d'une roue d'un véhicule en comparant une mesure de vitesse de véhicule, obtenue par effet Doppler d'un signal acoustique (ultrasons) qui se réfléchit sur une cible fixe, à la vitesse de rotation des roues.

Le document JP 2010 008055 A révèle en outre les caractéristiques du préambule de la revendication 1.

### Exposé de l'invention

L'invention vise à remédier en tout ou partie aux inconvénients précités. A cet effet, l'invention a pour objet un système de stationnement automatique d'un véhicule, comportant :
- un appareil de télédétection par laser, configuré pour mesurer une distance parcourue entre le véhicule et une cible fixe ;
- des capteurs de mesure, agencés pour mesurer un nombre de tours de roues du véhicule pour parcourir une distance donnée ;
- des moyens de calcul, configurés pour :
   calculer les dimensions des roues du véhicule à partir de la distance mesurée par l'appareil de télédétection par laser et à partir du nombre de tours de roues mesuré par les capteurs de mesure pour parcourir ladite distance mesurée ;
   calculer une trajectoire de stationnement du véhicule en fonction des dimensions calculées des roues du véhicule.

Ainsi, un tel système selon l'invention permet d'améliorer la précision de la trajectoire de stationnement en tenant compte des dimensions réelles des roues du véhicule grâce à l'appareil de télédétection par laser et aux capteurs de mesure du nombre de tours de roues du véhicule.

Le système selon l'invention peut comporter une ou plusieurs des caractéristiques suivantes.

Selon une caractéristique de l'invention, les moyens de calcul sont configurés pour calculer les dimensions des roues du véhicule à partir du ratio entre :
- la distance mesurée par l'appareil de télédétection par laser, et
- le nombre de tours de roues mesuré par les capteurs de mesure pour parcourir ladite distance mesurée.

Selon une caractéristique de l'invention, le système au moins un capteur, agencé pour mesurer la distance parcourue entre le véhicule et la cible fixe, le capteur étant de préférence choisi parmi :
- un capteur à ultrasons,
- une caméra, présentant un champ de vision comprenant la cible fixe.

Selon une caractéristique de l'invention, les moyens de calcul sont configurés pour calculer les dimensions des roues du véhicule à partir de la distance moyenne mesurée par l'appareil de télédétection par laser et par le capteur, et à partir du nombre de tours de roues mesuré par les capteurs de mesure pour parcourir ladite distance moyenne mesurée.

Ainsi, un avantage procuré est d'améliorer la fiabilité du système en moyennant les distances mesurées par l'appareil de télédétection par laser et par un autre capteur (e.g. capteur à ultrasons, caméra etc.).

Selon une caractéristique de l'invention, les moyens de calcul sont configurés pour calculer les dimensions des roues du véhicule à partir du ratio entre :
- la distance moyenne mesurée par l'appareil de télédétection par laser et par le capteur, et
- le nombre de tours de roues mesuré par les capteurs de mesure pour parcourir ladite distance moyenne mesurée.

Selon une caractéristique de l'invention, l'appareil de télédétection par laser et le capteur sont configurés pour mesurer la trajectoire du véhicule par triangulation ; et les moyens de calcul sont configurés pour comparer la trajectoire de stationnement calculée du véhicule avec la trajectoire mesurée.

Ainsi, il est possible d'améliorer la précision de la trajectoire de stationnement.

Selon une caractéristique de l'invention, le système comporte un correcteur électronique de trajectoire comprenant les capteurs de mesure.

Ainsi, un avantage procuré est de s'affranchir de capteurs de mesure dédiés en utilisant les capteurs de mesure du correcteur électronique de trajectoire.

Selon une caractéristique de l'invention, le correcteur électronique de trajectoire est configuré pour fournir la trajectoire instantanée du véhicule ; et les moyens de calcul sont configurés pour calculer la trajectoire de stationnement du véhicule en fonction des dimensions calculées des roues du véhicule et de la trajectoire instantanée du véhicule fournie par le correcteur électronique de trajectoire.

Ainsi, un avantage procuré est d'améliorer la précision de la trajectoire de stationnement.

Selon une caractéristique de l'invention, le système comporte des moyens de commande agencés pour commander un groupe motopropulseur du véhicule comprenant les roues motrices ; les moyens de commande étant configurés pour appliquer un couple aux roues motrices selon la trajectoire de stationnement calculée par les moyens de calcul.

Selon une caractéristique de l'invention, le système comporte des moyens de mesure agencés pour mesurer l'angle de braquage des roues du véhicule, et les moyens de calcul sont configurés pour calculer la trajectoire de stationnement du véhicule en fonction des dimensions calculées des roues du véhicule et de l'angle de braquage.

L'invention a également pour objet un véhicule, comportant un système conforme à l'invention.

### Brève description des dessins

D'autres caractéristiques et avantages apparaîtront dans l'exposé détaillé de différents modes de réalisation de l'invention, l'exposé étant assorti d'exemples et de références aux dessins joints.

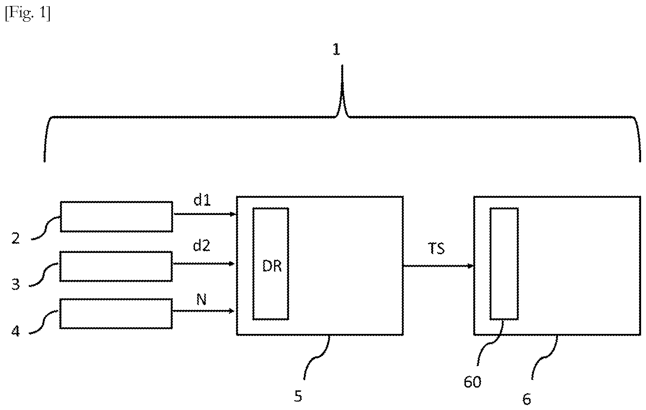

[Fig. 1] Figure 1 est un schéma explicatif d'un mode de réalisation d'un système selon l'invention.

### Exposé détaillé des modes de réalisation

Les éléments identiques ou assurant la même fonction porteront les mêmes références pour les différents modes de réalisation, par souci de simplification.

Un objet de l'invention est un système 1 de stationnement automatique d'un véhicule, comportant :
- un appareil 2 de télédétection par laser, configuré pour mesurer une distance d1 parcourue entre le véhicule et une cible fixe;
- des capteurs de mesure 4, agencés pour mesurer un nombre N de tours de roues du véhicule pour parcourir une distance donnée ;
- des moyens de calcul, configurés pour :
   calculer les dimensions DR des roues du véhicule à partir de la distance d1 mesurée par l'appareil 2 de télédétection par laser et à partir du nombre N de tours de roues mesuré par les capteurs de mesure 4 pour parcourir ladite distance d1 mesurée ;
   calculer une trajectoire de stationnement TS du véhicule en fonction des dimensions DR calculées des roues du véhicule.

### Appareil de télédétection par laser

L'appareil 2 de télédétection par laser (LIDAR pour « *Laser Imaging Détection And Ranging »* en langue anglaise) peut être agencé à l'avant, à l'arrière, ou sur un côté du véhicule.

### Autres capteur(s) de distance

Le système 1 comporte avantageusement au moins un capteur 3, agencé pour mesurer la distance d2 parcourue entre le véhicule et la cible fixe, le capteur 3 étant de préférence choisi parmi :
- un capteur à ultrasons,
- une caméra, présentant un champ de vision comprenant la cible fixe.

Ainsi, le système 1 peut comporter au moins un capteur à ultrasons 3 (communément appelé radar), agencé pour mesurer la distance d2 parcourue entre le véhicule et la cible fixe. Le ou les capteurs à ultrasons 3 peuvent être agencés à l'avant, à l'arrière, ou sur un côté du véhicule. Le capteur à ultrasons 3 peut être configuré pour mesurer la distance d2 parcourue entre le véhicule et la cible fixe par effet Doppler.

Le système 1 peut comporter au moins une caméra 3, agencée pour mesurer la distance d2 parcourue entre le véhicule et la cible fixe. En présence de plusieurs caméras 3, la distance d2 mesurée par les caméras 3 est moyennée afin de tenir compte de la corrélation des mesures entre les caméras 3. La ou les caméras 3 peuvent comporter une caméra 3 de recul, agencée pour présenter un champ de vision à l'arrière du véhicule. La caméra 3 de recul est de préférence de type panoramique. La ou les caméras 3 peuvent comporter une caméra 3 avant, agencée pour présenter un champ de vision à l'avant du véhicule. La caméra 3 avant peut être de type panoramique. La ou les caméras 3 peuvent comporter une caméra 3 frontale, de préférence intégrée au parebrise du véhicule. La caméra 3 avant et la caméra 3 frontale peuvent être couplées de manière à présenter une vision stéréoscopique. La ou les caméras 3 peuvent comporter des caméras 3 latérales, agencées pour présenter un champ de vision sur un côté du véhicule. A titre d'exemple, les caméras 3 latérales peuvent être intégrées dans les rétroviseurs du véhicule.

La cible fixe possède avantageusement des dimensions prédéterminées afin de calibrer la ou les caméras 3. A titre d'exemples non limitatifs, la cible fixe peut être un panneau de signalisation routière, un mobilier urbain tel qu'un lampadaire, un véhicule stationné.

### Capteurs de mesure

Le système 1 comporte avantageusement un correcteur électronique de trajectoire (ESP pour « *Electronic Stability Program* » en langue anglaise) comprenant les capteurs de mesure 4. Les capteurs de mesure 4 sont avantageusement configurés pour mesurer un nombre N partiel (i.e. une fraction) de tours de roues du véhicule.

Le correcteur électronique de trajectoire est avantageusement configuré pour fournir la trajectoire instantanée du véhicule. La trajectoire instantanée permet de tenir compte notamment de la vitesse latérale du véhicule.

### Moyens de calcul

Les moyens de calcul sont avantageusement configurés pour calculer les dimensions DR des roues du véhicule à partir du ratio entre :
- la distance d1 mesurée par l'appareil 2 de télédétection par laser, et
- le nombre N de tours de roues mesuré par les capteurs de mesure 4 pour parcourir ladite distance d1 mesurée.

En présence d'au moins un capteur à ultrasons 3, les moyens de calcul sont avantageusement configurés pour calculer les dimensions DR des roues du véhicule à partir de la distance moyenne mesurée par l'appareil 2 de télédétection par laser et par le capteur à ultrasons 3, et à partir du nombre N de tours de roues mesuré par les capteurs de mesure 4 pour parcourir ladite distance moyenne mesurée. La distance moyenne permet de tenir compte de la corrélation des mesures entre l'appareil 2 de télédétection par laser et le capteur à ultrasons 3. Les moyens de calcul sont avantageusement configurés pour calculer les dimensions DR des roues du véhicule à partir du ratio entre :
- la distance moyenne mesurée par l'appareil 2 de télédétection par laser et par le capteur à ultrasons 3, et
- le nombre N de tours de roues mesuré par les capteurs de mesure 4 pour parcourir ladite distance moyenne mesurée.

En présence d'au moins une caméra 3, les moyens de calcul sont avantageusement configurés pour calculer les dimensions DR des roues du véhicule à partir de la distance moyenne mesurée par l'appareil 2 de télédétection par laser et par les caméras 3, et à partir du nombre N de tours de roues mesuré par les capteurs de mesure 4 pour parcourir ladite distance moyenne mesurée. La distance moyenne permet de tenir compte de la corrélation des mesures entre l'appareil 2 de télédétection par laser et les caméras 3. Les moyens de calcul sont avantageusement configurés pour calculer les dimensions DR des roues du véhicule à partir du ratio entre :
- la distance moyenne mesurée par l'appareil 2 de télédétection par laser et par les caméras 3, et
- le nombre N de tours de roues mesuré par les capteurs de mesure 4 pour parcourir ladite distance moyenne mesurée.

Lorsque le correcteur électronique de trajectoire est configuré pour fournir la trajectoire instantanée du véhicule, les moyens de calcul sont avantageusement configurés pour calculer la trajectoire de stationnement TS du véhicule en fonction des dimensions DR calculées des roues du véhicule et de la trajectoire instantanée du véhicule fournie par le correcteur électronique de trajectoire.

Le système comporte avantageusement des moyens de mesure agencés pour mesurer l'angle de braquage des roues du véhicule. Les moyens de mesure peuvent comporter un capteur agencé pour mesurer l'angle du volant. Le correcteur électronique de trajectoire peut être configuré pour fournir l'angle de braquage des roues du véhicule. Les moyens de calcul sont avantageusement configurés pour calculer la trajectoire de stationnement TS du véhicule en fonction des dimensions DR calculées des roues du véhicule et de l'angle de braquage.

Lorsque l'appareil 2 de télédétection par laser et le capteur 3 sont configurés pour mesurer la trajectoire du véhicule par triangulation, les moyens de calcul 5 sont avantageusement configurés pour comparer la trajectoire de stationnement TS calculée du véhicule avec la trajectoire mesurée.

Les moyens de calcul sont avantageusement mis en oeuvre par un processeur 5.

### Commande des roues motrices

Le système comporte avantageusement des moyens de commande 60 agencés pour commander un groupe motopropulseur 6 du véhicule comprenant les roues motrices.

Les moyens de commande 60 sont avantageusement configurés pour appliquer un couple aux roues motrices selon la trajectoire de stationnement TS calculée par les moyens de calcul.

### Véhicule

Un objet de l'invention est un véhicule comportant un système 1 conforme à l'invention.

L'invention ne se limite pas aux modes de réalisation exposés. L'homme du métier est mis à même de considérer leurs combinaisons techniquement opérantes, et de leur substituer des équivalents.

## Revendications

1. Système (1) de stationnement automatique d'un véhicule, comportant :
- un appareil (2) de télédétection par laser, configuré pour mesurer une distance (d1) parcourue entre le véhicule et une cible fixe ;
- des capteurs de mesure (4), agencés pour mesurer un nombre (N) de tours de roues du véhicule pour parcourir une distance donnée ;
- des moyens de calcul (5), configurés pour :
calculer les dimensions (DR) des roues du véhicule à partir de la distance mesurée par l'appareil (2) de télédétection par laser et à partir du nombre (N) de tours de roues mesuré par les capteurs de mesure (4) pour parcourir ladite distance (d1) mesurée ;
calculer une trajectoire de stationnement (TS) du véhicule en fonction des dimensions (DR) calculées des roues du véhicule ;
**caractérisé en ce que**
ledit système comporte au moins un capteur (3), agencé pour mesurer la distance (d2) parcourue entre le véhicule et la cible fixe, le capteur (3) étant de préférence choisi parmi :
- un capteur à ultrasons,
- une caméra, présentant un champ de vision comprenant la cible fixe ;
dans lequel les moyens de calcul (5) sont configurés pour calculer les dimensions (DR) des roues du véhicule à partir de la distance moyenne mesurée par l'appareil (2) de télédétection par laser et par le capteur (3), et à partir du nombre (N) de tours de roues mesuré par les capteurs de mesure (4) pour parcourir ladite distance moyenne mesurée .

2. Système (1) selon la revendication 1, dans lequel les moyens de calcul (5) sont configurés pour calculer les dimensions (DR) des roues du véhicule à partir du ratio entre :
- la distance (d1) mesurée par l'appareil (2) de télédétection par laser, et
- le nombre (N) de tours de roues mesuré par les capteurs de mesure (4) pour parcourir ladite distance (d1) mesurée.

3. Système (1) selon la revendication 1 ou 2, dans lequel les moyens de calcul (5) sont configurés pour calculer les dimensions (DR) des roues du véhicule à partir du ratio entre :
- la distance moyenne mesurée par l'appareil (2) de télédétection par laser et par le capteur (3), et
- le nombre (N) de tours de roues mesuré par les capteurs de mesure (4) pour parcourir ladite distance moyenne mesurée.

4. Système (1) selon l'une des revendications 1 à 3, dans lequel l'appareil (2) de télédétection par laser et le capteur (3) sont configurés pour mesurer la trajectoire du véhicule par triangulation ; et les moyens de calcul (5) sont configurés pour comparer la trajectoire de stationnement (TS) calculée du véhicule avec la trajectoire mesurée.

5. Système (1) selon l'une des revendications 1 à 4, comportant un correcteur électronique de trajectoire comprenant les capteurs de mesure (4).

6. Système (1) selon la revendication 5, dans lequel le correcteur électronique de trajectoire est configuré pour fournir la trajectoire instantanée du véhicule ; et les moyens de calcul (5) sont configurés pour calculer la trajectoire de stationnement (TS) du véhicule en fonction des dimensions (DR) calculées des roues du véhicule et de la trajectoire instantanée du véhicule fournie par le correcteur électronique de trajectoire.

7. Système (1) selon l'une des revendications 1 à 6, comportant des moyens de commande (60) agencés pour commander un groupe motopropulseur (6) du véhicule comprenant les roues motrices ; les moyens de commande (60) étant configurés pour appliquer un couple aux roues motrices selon la trajectoire de stationnement (TS) calculée par les moyens de calcul.

8. Système (1) selon l'une des revendications 1 à 7, comportant des moyens de mesure agencés pour mesurer l'angle de braquage des roues du véhicule, et les moyens de calcul sont configurés pour calculer la trajectoire de stationnement (TS) du véhicule en fonction des dimensions (DR) calculées des roues du véhicule et de l'angle de braquage.

## Patentansprüche

1. System (1) zum automatischen Parken eines Fahrzeugs, umfassend:
- ein Laser-Fernerfassungsgerät (2), das so konfiguriert ist, dass es eine zwischen dem Fahrzeug und einem festen Ziel zurückgelegte Entfernung (d1) misst;
- Messsensoren (4), die so angeordnet sind, dass sie eine Anzahl (N) der Radumdrehungen des Fahrzeugs messen, um eine bestimmte Strecke zurückzulegen;
- Berechnungsmittel (5), konfiguriert für:
Berechnen Sie die Abmessungen (DR) der Räder des Fahrzeugs aus der vom Laser-Fernerkundungsgerät (2) gemessenen Entfernung und aus der Anzahl (N) der von den Messsensoren (4) gemessenen Radumdrehungen, um diese Entfernung (d1) zurückzulegen. gemessen;
Berechnen einer Parktrajektorie (TS) des Fahrzeugs basierend auf den berechneten Abmessungen (DR) der Räder des Fahrzeugs; **dadurch gekennzeichnet, dass** das System mindestens einen Sensor (3) umfasst, der so angeordnet ist, dass er die zurückgelegte Distanz (d2) zwischen dem Fahrzeug und dem festen Ziel misst, wobei der Sensor (3) vorzugsweise ausgewählt wird aus:
- ein Ultraschallsensor,
- eine Kamera, die ein Sichtfeld einschließlich des festen Ziels darstellt;
bei dem die Berechnungsmittel (5) so konfiguriert sind, dass sie die Abmessungen (DR) der Räder des Fahrzeugs aus dem von der Laser-Fernerkundungseinrichtung (2) und vom Sensor (3) gemessenen durchschnittlichen Abstand und aus der Anzahl ( N) der von den Messsensoren (4) gemessenen Radumdrehungen, um die gemessene Durchschnittsstrecke zurückzulegen.

2. System (1) nach Anspruch 1, bei dem die Berechnungsmittel (5) zur Berechnung der Abmessungen (DR) der Fahrzeugräder aus dem Verhältnis zwischen:
- die vom Laser-Fernerkundungsgerät (2) gemessene Entfernung (d1) und
- die Anzahl (N) der Radumdrehungen, die von den Messsensoren (4) gemessen werden, um die gemessene Distanz (d1) zurückzulegen.

3. System (1) nach Anspruch 1 oder 2, bei dem die Berechnungsmittel (5) dazu ausgelegt sind, die Abmessungen (DR) der Fahrzeugräder aus dem Verhältnis zwischen:
- die vom Laser-Fernerkundungsgerät (2) und vom Sensor (3) gemessene durchschnittliche Entfernung und
- die Anzahl (N) der von den Messsensoren (4) gemessenen Radumdrehungen, um die gemessene Durchschnittsstrecke zurückzulegen.

4. System (1) nach einem der Ansprüche 1 bis 3, bei dem das Laser-Fernerfassungsgerät (2) und der Sensor (3) dazu konfiguriert sind, die Flugbahn des Fahrzeugs durch Triangulation zu messen; und die Berechnungsmittel (5) so konfiguriert sind, dass sie die berechnete Parktrajektorie (TS) des Fahrzeugs mit der gemessenen Trajektorie vergleichen.

5. System (1) nach einem der Ansprüche 1 bis 4, umfassend einen elektronischen Trajektorienkorrektor, der die Messsensoren (4) umfasst.

6. System (1) nach Anspruch 5, bei dem der elektronische Trajektorienkorrektor dazu konfiguriert ist, die momentane Trajektorie des Fahrzeugs bereitzustellen; und die Berechnungsmittel (5) so konfiguriert sind, dass sie die Parktrajektorie (TS) des Fahrzeugs als Funktion der berechneten Abmessungen (DR) der Räder des Fahrzeugs und der vom elektronischen Trajektorienkorrektor bereitgestellten momentanen Trajektorie des Fahrzeugs berechnen.

7. System (1) nach einem der Ansprüche 1 bis 6, umfassend Steuermittel (60), die so angeordnet sind, dass sie einen Antriebsstrang (6) des Fahrzeugs steuern, der die Antriebsräder umfasst; wobei die Steuermittel (60) so konfiguriert sind, dass sie entsprechend der von den Berechnungsmitteln berechneten Parktrajektorie (TS) ein Drehmoment auf die Antriebsräder aufbringen.

8. System (1) nach einem der Ansprüche 1 bis 7, umfassend Messmittel, die dazu eingerichtet sind, den Lenkwinkel der Räder des Fahrzeugs zu messen, und die Berechnungsmittel dazu konfiguriert sind, auf dieser Grundlage die Einparktrajektorie (TS) des Fahrzeugs zu berechnen die berechneten Abmessungen (DR) der Fahrzeugräder und der Lenkwinkel.

## Claims

1. System (1) for automatic parking of a vehicle, comprising:
- a laser remote sensing device (2), configured to measure a distance (d1) traveled between the vehicle and a fixed target;
- measuring sensors (4), arranged to measure a number (N) of wheel revolutions of the vehicle to cover a given distance;
- calculation means (5), configured for:
calculate the dimensions (DR) of the wheels of the vehicle from the distance measured by the laser remote sensing device (2) and from the number (N) of wheel revolutions measured by the measuring sensors (4) to travel said distance (d1) measured;
calculate a parking trajectory (TS) of the vehicle based on the calculated dimensions (DR) of the wheels of the vehicle; **characterized in that** said system comprises at least one sensor (3), arranged to measure the distance (d2) traveled between the vehicle and the fixed target, the sensor (3) preferably being chosen from:
- an ultrasonic sensor,
- a camera, presenting a field of vision including the fixed target;
in which the calculation means (5) are configured to calculate the dimensions (DR) of the wheels of the vehicle from the average distance measured by the laser remote sensing device (2) and by the sensor (3), and from the number (N) of wheel revolutions measured by the measuring sensors (4) to cover said measured average distance.

2. System (1) according to claim 1, in which the calculation means (5) are configured to calculate the dimensions (DR) of the vehicle wheels from the ratio between:
- the distance (d1) measured by the laser remote sensing device (2), and
- the number (N) of wheel revolutions measured by the measuring sensors (4) to cover said measured distance (d1).

3. System (1) according to claim 1 or 2, in which the calculation means (5) are configured to calculate the dimensions (DR) of the vehicle wheels from the ratio between:
- the average distance measured by the laser remote sensing device (2) and by the sensor (3), and
- the number (N) of wheel revolutions measured by the measuring sensors (4) to cover said measured average distance.

4. System (1) according to one of claims 1 to 3, in which the laser remote sensing device (2) and the sensor (3) are configured to measure the trajectory of the vehicle by triangulation; and the calculation means (5) are configured to compare the calculated parking trajectory (TS) of the vehicle with the measured trajectory.

5. System (1) according to one of claims 1 to 4, comprising an electronic trajectory corrector comprising the measurement sensors (4).

6. System (1) according to claim 5, in which the electronic trajectory corrector is configured to provide the instantaneous trajectory of the vehicle; and the calculation means (5) are configured to calculate the parking trajectory (TS) of the vehicle as a function of the calculated dimensions (DR) of the wheels of the vehicle and the instantaneous trajectory of the vehicle provided by the electronic trajectory corrector.

7. System (1) according to one of claims 1 to 6, comprising control means (60) arranged to control a powertrain (6) of the vehicle comprising the drive wheels; the control means (60) being configured to apply a torque to the drive wheels according to the parking trajectory (TS) calculated by the calculation means.

8. System (1) according to one of claims 1 to 7, comprising measuring means arranged to measure the steering angle of the wheels of the vehicle, and the calculation means are configured to calculate the parking trajectory (TS) of the vehicle based on the calculated dimensions (DR) of the vehicle wheels and the steering angle.
